# EUROPÄISCHE PATENTANMELDUNG

(11) **EP 0 823 358 A1**
(43) Veröffentlichungstag der Anmeldung: **11.02.1998**
(21) Anmeldenummer: 97110006.0
(22) Anmeldetag: 19.06.1997
(51) Int. Cl.: B60S 1/34

(54) **Scheibenwischerarm**

(30) Priorität: 29.07.1996 DE 19630512
(71) Anmelder: ROBERT BOSCH GMBH, 70442 Stuttgart (DE)
(72) Erfinder: Lorenz, Karlheinz, 76534 Baden-Baden (DE); Hurst, Richard, 77855 Achern-Wagshurst (DE)

(57) **Zusammenfassung**

Die Erfindung betrifft einen Scheibenwischerarm (10) mit einem Nabenteil (12), das mit einer pendelnd angetriebenen Wischerwelle (14) festverbindbar ist und mit einem mit dem Nabenteil (12) über ein Gelenk (16) verbundenen Tragarm (18). Der Tragarm (18) ist um die Achse (28) des Gelenks (16) in einer auf der zu wischenden Scheibe (24) stehenden Ebene schwenkbar und in Richtung der zu wischenden Scheiben (24) durch mindestens ein elastisches Element (14) belastet. Der Tragarm (18) und das Nabenteil (12) weisen miteinander in Wirkkontakt bringbare Rast- bzw. Gegenrastmittel (30,38,68) auf. Es wird vorgeschlagen, daß die Rast- und Gegenrastmittel (30,38,68) in einer Position, wenn der Scheibenwischerarm (10) von der zu wischenden Scheibe (24) abgehoben ist in Eingriff gelangen und gegeneinander eine von dem elastischen Element (40) erzeugte Kraft ausüben.

## Beschreibung

### Stand der Technik

Die Erfindung geht aus von einem Scheibenwischerarm nach der Gattung des Hauptanspruchs. Es ist schon ein solcher Scheibenwischerarm bekannt (DE-OS 40 28 902), bei dem der Tragarm eine dem Nabenteil zugewandte, fest mit ihm verbundene Rastschulter aufweist. Dieser sind Gegenrastmittel des Nabenteils zugeordnet, welche sich in Betriebsstellung des Wischarms in einen Schwenkkreis der Rastschulter erstrecken und zu dieser federbelastet ausweichbar angeordnet sind. Diese Anordnung kann jedoch in der Abklappstellung des Wischarms den Wischarm selbst nicht immer sicher arretieren.

### Vorteile der Erfindung

Der erfindungsgemäße Scheibenwischerarm mit den Merkmalen des Hauptanspruchs hat den Vorteil, daß der Wischarm in seiner Abklappstellung durch die zwischen Rastmittel und Gegenrastmittel wirkende Kraft sicher in einer definierten Position arretierbar ist. Ferner ist die Kraft der Zugfedern in der Abklappstellung vorbestimmbar, wodurch die Auslösekraft für die Rückführung des Wischarms auf die Scheibe ebenfalls vorbestimmbar ist.

Durch die in den Unteransprüchen aufgeführten Merkmale sind vorteilhafte Weiterbildungen der Erfindung nach dem Hauptanspruch möglich. So erhält man einen gedrängten Aufbau, wenn die zu erzeugende Kraft von mindestens einer Feder ausgeht, die auf das Gegenrastmittel wirkt. In diesem Fall wird die Feder zwischen dem Nabenteil, das das Gegenrastmittel aufnimmt und einem vom Gelenk entfernten Punkt am Tragarm definiert vorgespannt.

Wenn das Rastmittel das Gegenrastmittel in der abgehobenen Position vom Nabenteil mechanisch trennt, verschwindet das den Wischerarm in Scheibenrichtung belastende Moment ganz. Die Abklapparretierung ist somit besonders sicher.

Das Gegenrastmittel kann ein einfacher Stift sein, der, um eine Rastbewegung zu ermöglichen, mit Spiel gelagert ist. Es ist auch möglich das Gegenrastmittel buchsenförmig auszugestalten, wobei dann in vorteilhafter Weise die Buchsenöffnung von einem Lagerstift mit Spiel durchdrungen wird. Der Lagerstift stellt somit die Verbindung des Gegenrastmittels zum Nabenteil sicher und ermöglicht aufgrund des Spiels die für die Einrastung notwendige Bewegungsfreiheit.

Eine besonders sichere Arretierung ergibt sich, wenn das Rastmittel an seinem dem Gegenrastmittel zugewandten Ende eine der Kontur des Gegenrastmittels angepaßte Kurve aufweist, die in einen angeformten Nocken übergeht. Auf diese Weise muß im Falle des Einrastens das Gegenrastmittel entgegen der von dem elastischen Element erzeugten Kraft über den Nocken bis in den das Gegenrastmittel formschlüssig aufnehmenden Kurvenbereich wandern. Über die Höhe des Nockens kann in Verbindung mit dem elastischen Element die für die Rastung aufzubringende Kraft eingestellt werden. Durch die formschlüssige Aufnahme des Gegenrastmittels durch das Rastmittel ist gewährleistet, daß der Wischerarm in seiner Abklappstellung fest positioniert ist. Spielbehaftete Bewegungen, die sich insbesondere bei sehr langen Wischarmen störend bemerkbar machen, sind auf diese Weise vermieden.

Durch das Anformen eines Anschlags an das Rastmittel, der in vorteilhafter Weise mit dem Gegenrastmittel zusammen wirkt, ist erreicht, daß der Scheibenwischerarm nur um einen vordefinierten Winkel von der Scheibe abgeklappt werden kann. Dies ist insbesondere dann wichtig, wenn die Achse des Scheibenwischers unterhalb der Motorhaube angeordnet ist und die zur Scheibe weisende Motorhaubenöffnung nur ein begrenztes Abklappen ermöglicht.

### Zeichnung

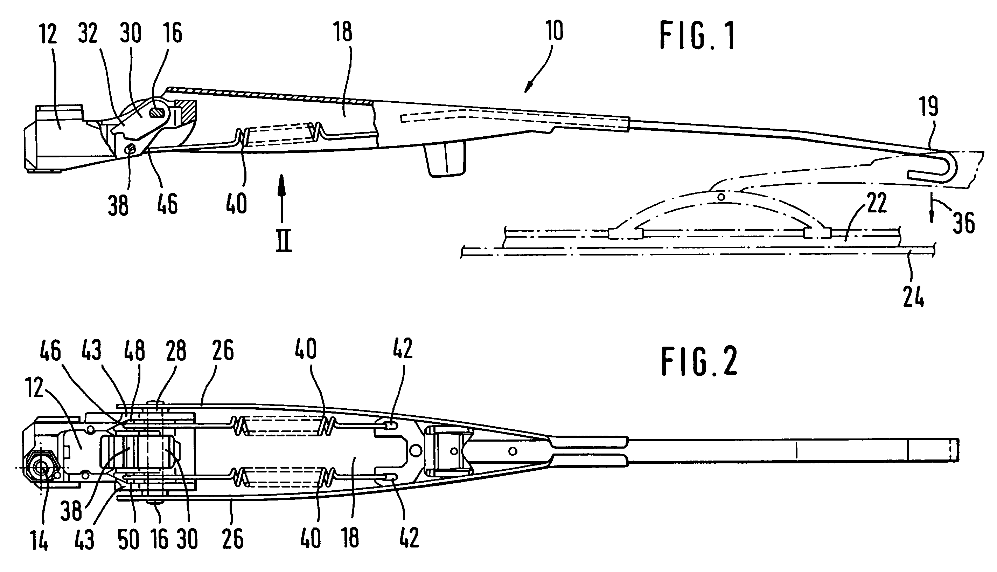

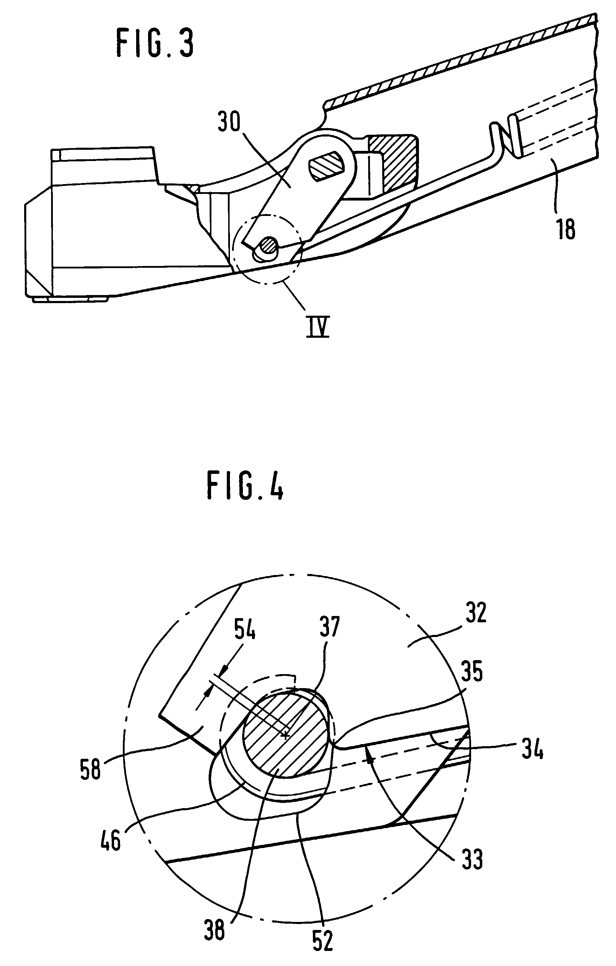

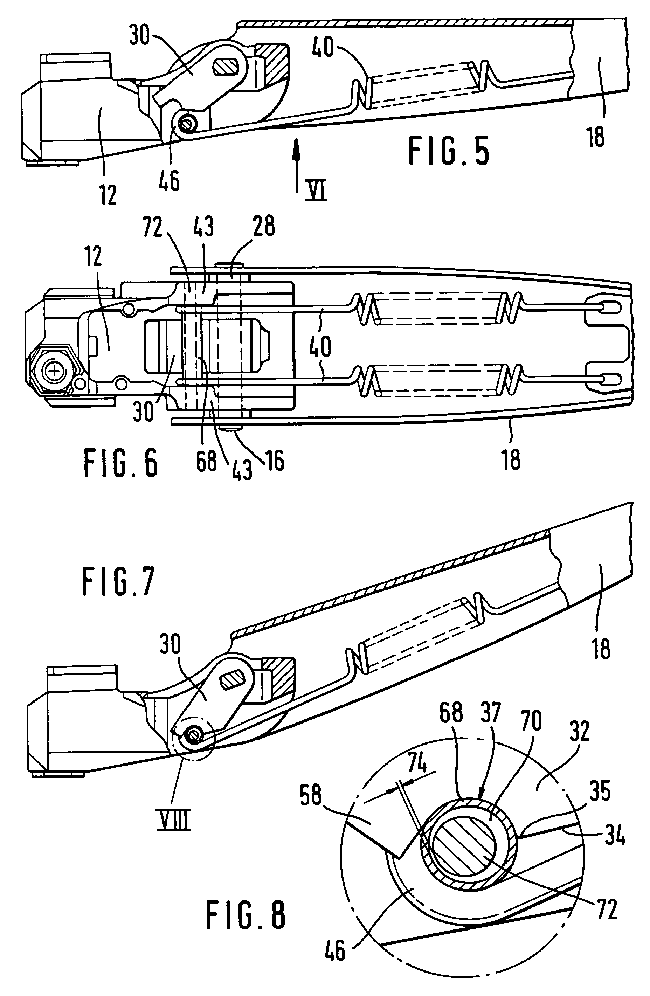

In der Zeichnung sind zwei Ausführungsbeispiele des erfindungsgemäßen Scheibenwischerarms dargestellt und in der nachfolgenden Beschreibung näher erläutert. Es zeigen die Figur 1 einen Scheibenwischerarm nach dem ersten Ausführungsbeispiel in Seitenansicht, teilweise geschnitten, Figur 2 den Scheibenwischerarm nach Figur 1 in Richtung des Pfeiles II, Figur 3 den Scheibenwischerarm des ersten Ausführungsbeispiels in Abklappstellung in vergrößerter Darstellung und Figur 4 ein Detail aus Figur 3 entsprechend der Linie IV in weiter vergrößerter Darstellung, Figur 5 einen Scheibenwischerarm gemäß dem zweiten Ausführungsbeispiel in Seitenansicht, teilweise geschnitten, Figur 6 den Scheibenwischerarm nach Figur 5 in Richtung des Pfeiles VI, Figur 7 den Scheibenwischerarm des zweiten Ausführungsbeispiel in Abklappstellung und Figur 8 ein vergrößert dargestelltes Detail des Scheibenwischerarms nach Figur 7 entsprechend der Linie VIII.

### Beschreibung

Ein in den Figuren 1 und 2 dargestellter Scheibenwischerarm 10 weist ein Nabenteil 12 auf, das fest mit einer pendelnd angetriebenen Wischerwelle 14 verbunden ist. An dem Nabenteil 12 ist über ein Gelenk 16 ein Tragarm 18 angelenkt, und an dem von dem Gelenk 16 abgewandten, freien Ende des Tragarms 18 ist eine als Anschlußhaken 19 ausgebildete Befestigungseinrichtung eines strichpunktiert dargestellten Wischblatts 20 angeordnet. Das Wischblatt 20 liegt mit einem Wischelement 22 auf der Oberfläche einer zu wischenden Windschutzscheibe 24 eines Kraftfahrzeugs auf.

Das Gelenk 16 ist so angeordnet, daß sich die Achse des Gelenks 16 im wesentlichen in der Pendelebene erstreckt, so daß der Tragarm 18 zusammen mit dem Wischblatt 20 in einer auf der zu wischenden Scheibe 24 stehenden Ebene schwenkbar ist. Um bestimmte Arbeiten an dem Scheibenwischerarm 10 vornehmen zu können, ist der Scheibenwischerarm 10 aus seiner in Figur 1 gezeigten Arbeitsposition in eine in Figur 3 dargestellte Montageposition schwenkbar.

Der Wischarm 10 ist mit noch näher zu beschreibenden Rast- und Gegenrastmitteln versehen, welche dafür sorgen, daß der Tragarm 18 in seiner Montageposition fixiert wird. In dieser Montageposition läßt sich beispielsweise auf einfache Weise das Wischblatt 20 auswechseln. Danach wird der Scheibenwischarm 10 zusammen mit dem Wischblatt 20 wieder in Richtung auf die Kraftfahrzeugwindschutzscheibe 24 zugeschwenkt und von in Richtung des Pfeiles 36 wirkende Zugfedern 40 mit dem vorschriftsmäßigen Anlagedruck an der Scheibe angelegt gehalten. Die bisher beschriebene Anordnung ist aus dem eingangs angegebenen Stand der Technik bekannt, auf den hier ausdrücklich bezug genommen wird.

Das Nabenteil 12 weist an seinem einen Ende eine Aufnahmebohrung für die Wischerwelle 14 auf, so daß der Scheibenwischerarm 10 fest mit der Scheibenwischerwelle 14 verbunden werden kann. Der Tragarm 18 ist im Bereich des Nabenteils 12 im Querschnitt von U-förmiger Gestalt und vorzugsweise aus Blech geformt. Die Achse 28 des Gelenks 16 ist durch die beiden Schenkel 26 des U-förmigen Tragarms 18 geführt und durch eine besondere Formgebung verdrehsicher gehalten. Zwischen den beiden Schenkeln 26 ist an der Achse 28 ein Rastmittel in Form eines Rastfingers 30 verdrehsicher auf der Achse 28 aufgesteckt. Der Rastfinger 30 schwenkt folglich um den gleichen Schwenkwinkel wie der Tragarm 18, wenn dieser in seine Montageposition bzw. zurück auf die zu wischende Scheibe geschwenkt wird.

An dem der Achse 28 abgewandten Ende 32 weist der Rastfinger 30 eine Kurve 33 auf (siehe Figur 4), die sich aus einer Anlaufstrecke 34, einem Nocken 35 und einer konkaven Wölbung 37 zusammensetzt.

Dieser Kurve 33 des Rastfingers 30 sind Gegenrastmittel des Nabenteils 12 zugeordnet. Die Gegenrastmittel des Nabenteils 12 sind durch ein stiftförmiges Bauteil 38 gebildet, das sich im wesentlichen parallel zur Achse 28 des Gelenks 16 erstreckt. An dem stiftförmigen Bauteil 38 ist ein Ende einer Zugfeder 40 eingehängt, deren anderes Ende in einer Öse 42 verankert ist, welche fest mit dem Tragarm 18 verbunden ist. Mittels der Zugfeder 40 wird auch die Kraft erzeugt, mit der der Scheibenwischerarm 10 das Wischblatt 20 auf die zu wischende Windschutzscheibe 24 preßt.

Das stiftartige Bauteil 38 ist zwischen zwei mit Abstand voneinander angeordneten Wangen 43 des Nabenteils 12 verschiebbar gelagert. Im Ausführungsbeispiel sind zwei Zugfedern 40 vorgesehen, die innerhalb der Wangen 43 am Bauteil 38 angreifen. Der Rastfinger 30 ist zwischen den Zugfedern 40 angeordnet.

Die beiden Ende 48,50 des stiftartigen Bauteils 38 sind von Führungsausnehmungen 52 der Wangen 43 mit Spiel aufgenommen (Figur 4). Die Feder 40 ist so vorgespannt, daß sie mit ihrem Einhängeende 46 das Bauteil 38 in den Führungsausnehmungen 52 an den auf den Rastfinger 30 zuweisenden Seiten dieser Ausnehmungen angelegt hält. Dabei befindet sich der Bolzen 38 innerhalb eines Kreisbogenabschnitts, den die Kurve 33 des Rastfingers 30 beschreibt, wenn der Tragarm 18 um die Achse 28 des Gelenks 16 geschwenkt wird. Die Führungsausnehmungen 52 sind so angeordnet und ausgebildet, daß der Bolzen 38 entgegen der Kraft der Feder 40 aus dem Schwenkkreis der Kurve 33 heraus ausgelenkt werden kann. Dazu ist der Verlauf der Kurve 33 so gewählt, daß beim Verschwenken des Tragarms 18 in die Montageposition gemäß Figur 4 die Anlaufstrecke 34 entlang des Bauteils 38 geführt wird, bis dieses am Nocken 35 zur Anlage gelangt. Beim Weiterverschwenken übt der Nocken 35 eine Kraft auf das Bauteil 38 aus, welche dieses aus dem Schwenkkreis herausdrückt. Beim Weiterschwenken des Tragarms 18 rastet das Bauteil 38 in die konkave Wölbung 37 ein. Die Wölbung 37 ist so geformt, daß sie das stiftförmige Bauteil 38 formschlüssig umgreift, wobei das Bauteil 38 in einem Abstand 54 von seiner Lage in Wischposition gehalten ist. Das Bauteil 38 wird somit durch den Rastfinger 30 um den Abstand 54 von seiner Lage in Wischposition vom Nabenteil 12/Wangen 43 abgehoben. Dadurch wirkt das Bauteil 38 mit einer Kraft nur noch auf den Rastfinger 30, so daß der Tragarm 18 formschlüssig in der verrasteten Position gehalten wird. Dabei wirkt kein Moment durch die Zugfedern 40 mehr auf den Tragarm 18.

Die Kurve 33 des Rastfingers 30 geht an den der Anlaufstrecke 34 gegenüberliegenden Seite in einen Anschlag 58 über, der in der Montageposition des Tragarms 18 am Bauteil 38 anliegt. Aufgrund dieses Anschlags 38 ist ein Weiterverschwenken über die Montageposition hinaus verhindert.

Im in den Figuren 5 bis 8 dargestellten Ausführungsbeispiel 2 sind gleiche Bauteile wie im ersten Ausführungsbeispiel mit den gleichen Bezugszahlen bezeichnet. Der Rastfinger 30 ist identisch mit dem Rastfinger 30 des ersten Ausführungsbeispiels und ebenso befestigt. Ein dem Bauteil 38 entsprechendes Bauteil 68 wird von den Zugfedern 40 belastet. Das Bauteil 68 ist buchsenförmig ausgestaltet und weist eine Öffnung 70 auf, die einen Stift 72 mit Spiel aufnimmt. Die Länge des Bauteils 68 entspricht der lichten Weite der Wangen 43, die den Stift 72 fest eingepresst aufnehmen. Auf diese Weise ist das Bauteil 68 in axialer Richtung fest und in radialer Richtung um den Stift 72 beweglich gehalten.

Wird der Tragarm 18 aus seiner Arbeitsstellung in eine Montagestellung geschwenkt, bewegt sich das Ende 32 des Rastfingers 30 in Richtung des Bauteils 68, wodurch dieses an der Anlaufstrecke 34 zur Anlage gelangt und bei fortgesetzter Schwenkbewegung eine der Federkraft der Federn 40 entgegenwirkende Kraft ausgehend vom Nocken 35 erfährt. Das Bauteil 68 wird um die Nockenhöhe ausgelenkt und rastet in die konkave Wölbung 37 des Rastfingers 30 ein. In dieser verrasteten Position, weist das Bauteil 68 einen durch die Lage der Wölbung 37 bestimmten Abstand 74 von der in der Arbeitsstellung eingenommenen Position auf. Das Bauteil 68 liegt somit nicht am Stift 72 an. Auf diese Weise liegt das Bauteil 68 mit einer durch die Kraft der Zugfedern vorgegebene Anlagekraft am Rastfinger 30 an und arretiert diesen und damit auch den Tragarm 18 in seiner Position. Das Moment der Zugfedern 40 auf den Tragarm 18 ist in dieser arretierten Position gleich Null.

Beim Zurückschwenken in die Arbeitsposition muß das Bauteil 68 wieder entgegen der Kraft der Federn 40 über den Nocken 35 ausgelenkt werden, um dann, beim weiteren Verschwenken des Tragarms 18 in die ursprüngliche Position zurückzukehren.

Da die Federn 40 neben der Aufpreßkraft des Wischers auf die Windschutzscheibe auch die für die Verrasterung benötigte Kraft aufbringt, kann auf zusätzliche Federelemente für die Arretierung verzichtet werden.

## Patentansprüche

1. Scheibenwischerarm mit einem Nabenteil, das mit einer pendelnd angetriebenen Wischerwelle fest verbindbar ist und mit einem mit dem Nabenteil über ein Gelenk verbundenen Tragarm, der um die Achse des Gelenks in einer auf der zu wischenden Scheibe stehenden Ebene schwenkbar und in Richtung der zu wischenden Scheibe durch mindestens ein elastisches Element belastbar ist, wobei der Tragarm und das Nabenteil miteinander in Wirkkontakt bringbare Rast- bzw. Gegenrastmittel aufweisen, dadurch gekennzeichnet, daß die Rast- und Gegenrastmittel (30, 38, 68) in einer Position, wenn der Scheibenwischer (10) von der zu wischenden Scheibe (24) abgehoben ist, in Eingriff gelangen und gegeneinander eine von dem elastischen Element (40) erzeugte Kraft ausüben.

2. Scheibenwischerarm nach Anspruch 1, dadurch gekennzeichnet, daß das Gegenrastmittel (38, 68) federbelastet ist.

3. Scheibenwischerarm nach Anspruch 1 oder 2, dadurch gekennzeichnet, daß das Rastmittel (30) das Gegenrastmittel (38, 68) in der abgehobenen Position formschlüssig umgreift.

4. Scheibenwischerarm nach Anspruch 3, dadurch gekennzeichnet, daß das Rastmittel (30) das Gegenrastmittel (38) in der abgehobenen Position vom Nabenteil (12) mechanisch trennt.

5. Scheibenwischerarm nach einem der Ansprüche 1 bis 4, dadurch gekennzeichnet, daß das Gegenrastmittel (38) stiftförmig ausgebildet und mit Spiel gelagert ist.

6. Scheibenwischerarm nach einem der Ansprüche 1 bis 4, dadurch gekennzeichnet, daß das Gegenrastmittel (68) buchsenförmig ausgebildet ist.

7. Scheibenwischerarm nach Anspruch 6, dadurch gekennzeichnet, daß das Gegenrastmittel (68) von einem Lagerstift (72) mit Spiel durchdrungen ist.

8. Scheibenwischerarm nach einem der vorhergehenden Ansprüche, dadurch gekennzeichnet, daß das dem Gegenrastmittel (38, 68) zuweisende Ende des Rastmittels (30) kurvenförmig ausgebildet ist und einen angeformten Nocken (35) aufweist.

9. Rastmittel nach einem der vorhergehenden Ansprüche, dadurch gekennzeichnet, daß das dem Gegenrastmittel (38, 68) zuweisende Ende (32) des Rastmittels (30) einen Anschlag (58) aufweist.

10. Scheibenwischerarm nach Anspruch 9, dadurch gekennzeichnet, daß das Gegenrastmittel (38, 68), wenn der Scheibenwischerarm von der zu wischenden Scheibe (24) abgehoben ist, am Anschlag (35) anliegt.
